# EUROPEAN PATENT SPECIFICATION

(11) **EP 3 476 623 B1**
(45) Date of publication and mention of the grant of the patent: **10.03.2021**
(21) Application number: 17815511.5
(22) Date of filing: 23.06.2017
(51) Int. Cl.: B60C 1/00, B60C 9/00, B60C 9/20, C08J 5/04, C08K 3/08, C08K 7/06, C08L 33/02, C08L 101/06, D07B 1/02, D07B 1/06

(54) **METHOD FOR MANUFACTURING TIRE**
VERFAHREN ZUR HERSTELLUNG EINES REIFENS
PROCÉDÉ DE FABRICATION D'UN PNEU

(30) Priority: 24.06.2016 JP 2016125947; 30.05.2017 JP 2017107042
(43) Date of publication of application: 01.05.2019
(73) Proprietor: Bridgestone Corporation, Tokyo 104-8340 (JP)
(72) Inventor: SHIZUKU Takahisa, Tokyo 104-8340 (JP); NAKAMURA Masaaki, Tokyo 104-8340 (JP)
(74) Representative: Lang, Johannes
(86) International application number: PCT/JP2017/023181
(87) International publication number: WO 2017/222046

(56) References cited:
- DE-B- 1 027 539
- JP-A- H1 035 221
- JP-A- H07 189 149
- JP-A- S60 231 884
- JP-A- S60 246 886
- JP-A- S61 138 789
- JP-A- 2001 234 444
- JP-A- 2002 538 327
- JP-A- 2003 289 616
- JP-A- 2010 053 495
- JP-B1- S6 127 519
- JP-U- H0 198 194
- JP-U- S60 105 698

## Description

### TECHNICAL FIELD

The present invention relates to a method for manufacturing a tire (hereinafter also referred to simply as "manufacturing method"), and particularly to a method for manufacturing a tire using a steel cord which can be manufactured without reducing productivity and can prevent propagation of moisture inside.

### BACKGROUND ART

Conventionally, a steel cord formed by twisting steel filaments together is used as a material for reinforcing a belt of a tire. However, in such a steel cord, for example, when the tire is externally injured and damage reaches the belt, moisture or the like in external environment enters a gap between filaments forming the steel cord, which can create rust on the steel cord. Due to this, a blocking for the route of water is provided by forming a gap in the steel cord to allow rubber to enter the steel cord when vulcanizing. Additionally, regarding steel cords having complicated structures, such as layer-twisted or multi-twisted steel cords, for example, document JP-T-2013-531741 has made investigations, such as closing the route of water entry by previously inserting rubber or resin when twisting. A composite cord for reinforcing a belt of a tire is also known from JP-2001234444 A.

### SUMMARY OF THE INVENTION

### PROBLEMS TO BE SOLVED BY THE INVENTION

However, the technique allowing entry of rubber in a steel cord at vulcanization is not easily applicable to steel cords having complicated structures other than simple structures such as single twisting. In addition, the technique of previously inserting rubber or resin when twisting, as proposed in JP-T-2013-531741, increases product cost, as well as a step of coating with the rubber or resin after twisting the wires together is added, leading to reduction of productivity. In particular, in the case of coating with rubber, if there is a long pending period before tire vulcanization, an excessive reaction may occur at an interface between the steel cord and the coating rubber, whereby adhesion may be hindered. Thus, in order to improve the productivity of a steel cord and the durability of a tire, it is necessary to reexamine the structure of a steel cord and investigate a new method for manufacturing a tire.

Accordingly, it is an object of the present invention to provide a method for manufacturing a tire using a steel cord which can be manufactured without reducing productivity and can prevent propagation of moisture inside.

### MEANS FOR SOLVING THE PROBLEMS

As a result of intensive and extensive studies to solve the above problems, the inventors of the present invention have found out that the above problems can be solved by using a predetermined material for a steel cord that is used as the belt cord of a tire, thereby having completed the present invention.

Specifically, a method for manufacturing a tire of the present invention is defined in claim 1. The method includes a vulcanization step of vulcanizing a green tire provided with a belt including at least one belt layer, wherein the belt layer includes a steel cord formed by twisting a steel filament together with a resin filament having a softening point of 125°C or lower, and the resin filament includes at least an ionomer. Herein, the softening point refers to a value measured using a softening point test method described in JIS K 7206 (1999). Note that, in the manufacturing method of the present invention, resin represents a concept encompassing thermoplastic resins including thermoplastic elastomers and thermosetting resins including thermosetting elastomers, but not encompassing vulcanized rubber.

In the manufacturing method of the present invention, the resin filament includes 0.1 to 30 parts by mass of an inorganic filler with respect to 100 parts by mass of a resin component, and the inorganic filler is preferably carbon black. In addition, in the manufacturing method of the present invention, a grade of the carbon black is preferably GPF. Furthermore, the resin filament further includes a resin modified with an acid anhydride. Still furthermore, in the manufacturing method of the present invention, the modified resin is a maleic acid-modified resin and/or a dimer acid-modified resin. In addition, in the manufacturing method of the present invention, a mass ratio of the maleic acid-modified resin to the ionomer is 4:6 to 6:4. The manufacturing method of the present invention is suitable for manufacturing a heavy load tire.

### EFFECTS OF THE INVENTION

According to the present invention, there can be provided a method for manufacturing a tire using a steel cord which can be manufactured without reducing productivity and can prevent propagation of moisture inside.

### BRIEF DESCRIPTION OF THE DRAWINGS

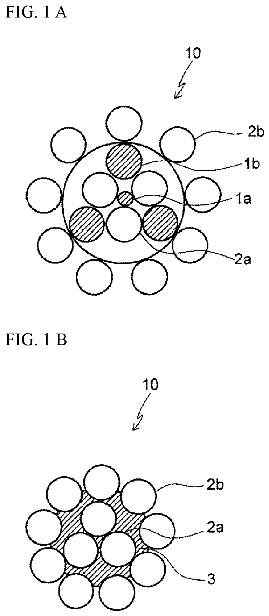

FIG. 1A is a cross-sectional view of a steel cord in a state before vulcanization according to one preferred embodiment of a manufacturing method of the present invention.
FIG. 1B is a cross-sectional view of a steel cord in a state after vulcanization according to one preferred embodiment of a manufacturing method of the present invention.

### MODE FOR CARRYING OUT THE INVENTION

Hereinafter, a method for manufacturing a tire of the present invention will be described in detail by using the drawings.

The manufacturing method of the present invention includes a vulcanization step of vulcanizing a green tire provided with a belt including at least one belt layer. In the manufacturing method of the present invention, the belt layer includes a steel cord formed by twisting a steel filament together with a resin filament containing a resin having a softening point of 125°C or lower, preferably a softening point of 60°C to 125°C, and more preferably 60°C to 90°C, in which the steel cord is coated with, for example, rubber, resin, elastomer, or the like (hereinafter, rubber or the like). When the softening point is higher than 125°C, there occur influences, such as that the resin filament is hardly softened during tire vulcanization and that building workability is worsened. Note that when the softening point of the resin is too low, the resin is easily softened due to heat generated during running, which can cause looseness of the steel filament, so that the softening point of the resin is preferably 60°C or higher.

FIGS. 1A and 1B show cross-sectional views of a steel cord according to one preferred embodiment of the manufacturing method of the present invention, in which FIG. 1A illustrates a state before vulcanization, and FIG. 1B illustrates a state after vulcanization. In the example illustrated in FIG. 1A, three steel filaments 2a and three resin filaments 1b are twisted together around to a resin filament 1a, and furthermore, nine steel filaments 2b are twisted together around an outer periphery thereof. In the belt layer including such a steel cord coated with rubber or the like, the resin filaments 1a and 1b are softened during vulcanization of a green tire, and, as illustrated in FIG. 1B, a softened resin 3 fills a gap between the steel filaments 2a and 2b. As a result, water passing between the steel filaments 2a and 2b can be prevented, whereby rust prevention effect can be exhibited.

In the manufacturing method of the present invention, when twisting the steel filament and resin filament that are completely different in characteristics together, it is necessary to prevent breakage of the resin filament. In conjunction with this, the resin filament is required to be made of a resin that has good adhesion to the interface of the steel filament after being softened so as to be able to prevent the interface with the steel filament from peeling off and becoming the route of water entry and that can prevent an interface with the rubber or the like coating the steel cord from peeling off and becoming the route of water entry. Thus, in the manufacturing method of the present invention, a resin including at least an ionomer is used for the resin filament. The ionomer smoothens the surface of the resin filament, so that when twisting the resin filament together with the steel filament, slipperiness between the steel filament and the resin filament can be improved, as a result of which breakage of the resin filament can be prevented, whereby spinnability of the steel cord can be improved, and simultaneously, slipperiness of the resin filament in a wire twisting machine can be improved. In the manufacturing method of the present invention, the resin filament can be any resin filament including at least an ionomer, and, for example, may be a resin filament including an ionomer alone.

In the manufacturing method of the present invention, the resin filament includes an inorganic filler. As described above, since the resin filament is required to be easily melted at vulcanization temperature, the melting point thereof is set to 125°C or lower. However, when the melting point of the resin is low, the strength of the resin filament is reduced, which may therefore cause breakage of the resin filament when twisting, thereby deteriorating productivity. Thus, in the manufacturing method of the present invention, an inorganic filler is added to the resin filament to improve the strength of the resin filament. In addition, since adding an inorganic filler to the resin filament reduces surface tack of the resin filament, slipperiness of the resin filament is further improved, thereby facilitating twisting the filaments together into a steel cord.

The amount of the inorganic filler to be added is 0.1 to 30 parts by mass, preferably 0.5 to 30 parts by mass, more preferably 5 to 30 parts by mass, and particularly preferably 10 to 20 parts by mass, with respect to 100 parts by mass of a resin component. When the amount of the inorganic filler to be added is below 0.1 parts by mass with respect to 100 parts by mass of the resin component, the reinforcement effect of the resin filament cannot be sufficiently obtained. On the other hand, when the amount thereof exceeds 30 parts by mass, the reinforcement effect of the resin filament is saturated, which is not preferable in terms of cost, and simultaneously, dispersibility of the inorganic filler is reduced, which may negatively affect durability of the resin filament.

In the manufacturing method of the present invention, examples of the inorganic filler include carbon black, silica, aluminum hydroxide, clay, alumina, talc, mica, kaolin, glass balloons, glass beads, calcium carbonate, magnesium carbonate, magnesium hydroxide, magnesium oxide, titanium oxide, potassium titanate, and barium sulfate. These may be used singly or in combination of two or more kinds thereof. Among them, carbon black is preferable from the viewpoint of reinforcement of the resin filament. Note that, usually, a rubber composition forming a tire also includes carbon black, which thus improves compatibility between the resin filament according to the manufacturing method of the present invention and the rubber composition forming the tire, so that improvement in adhesion between the rubber and the resin can also be expected.

In the case of using carbon black, the grade of the carbon black is not particularly limited, and any carbon black can be selected and used as appropriate. For example, SRF, GPF, FEF, HAF, ISAF, SAF, and the like are used. Particularly, FEF, HAF, ISAF, SAF, and the like excellent in bending resistance and fracture resistance are suitably mentioned. The nitrogen adsorption specific surface area N₂SA (confirming to JIS K 6217-2: 2001) is preferably 30 to 150 m²/g, and more preferably 35 to 130 m²/g.

In the manufacturing method of the present invention, the resin filament includes an acid-modified resin. Among acid-modified resins, resins modified with acid anhydrides such as dimer acid, maleic acid, and itaconic acid are preferable. Maleic acid-modified resin is preferable since it can improve adhesion to the steel filament. In the manufacturing method of the present invention, the percentage of the acid-modified resin can be set as appropriate as long as at least an ionomer is included. In order to obtain the effect of the maleic acid-modified resin and the effect of the ionomer in a well-balanced manner, it is sufficient that the mass ratio of maleic acid-modified resin to ionomer is in a range of 4:6 to 6:4 in consideration of balance among various performances. When the mass of the ionomer is equal to or more than the lower limit value of the above mass ratio, slipperiness of the resin filament in manufacturing is improved. Note that, in order to promote vulcanization adhesion at the interface between the resin and rubber or the like when vulcanizing, the neutralization degree of the ionomer is preferably set higher to give such a blend that does not cause vulcanization inhibition, as the alkaline side.

Examples of the maleic acid-modified resin include maleic anhydride-modified styrene-ethylene-butadiene-styrene block copolymer (SEBS), maleic anhydride-modified ultralow density polyethylene, maleic anhydride-modified ethylene-butene-1 copolymer, maleic anhydride-modified ethylene-propylene copolymer, maleic anhydride-modified ethylene-octene, and maleic anhydride-modified propylene. Specific examples of commercially available products include TUFTEC™ manufactured by Asahi Kasei Corporation, such as M1943, M1911, and M1913. Other than those, there can be mentioned ADMER™, e.g., LB548, NF518, QF551, QF500, and QE060, HI-WAX™, e.g., 4051E, 4252E, and 1105A, and TAFMER™, e.g., MH7010 and MH7020, all from Mitsui Chemicals, Inc. These may be used singly or in combination of two or more kinds thereof.

The ionomer is a thermoplastic resin mainly composed of olefin (covalent bonding) and obtained by introducing ionic bonding (cross-linking) between long chains, and is characterized by having small density, large toughness and resilience, and excellent oil resistance and solvent resistance. A carboxyl group is used as the anion moiety of the ionic cross-linking, and a metal ion, such as sodium ion, potassium ion, magnesium ion, or zinc ion, is used as the cation moiety thereof. The ionomer resin can be obtained by performing cross-linking between molecular chains (carboxyl groups in the molecular chains) of, for example, an ethylene-methacrylic acid copolymer or the like by a metal ion as mentioned above.

Specific examples of the ionomer include zinc ion neutralized ionomers, such as HIMILAN® 1554, HIMILAN® 1557, HIMILAN® 1650, HIMILAN® 1652, HIMILAN® 1702, HIMILAN® 1706, and HIMILAN® 1855 and sodium ion neutralized ionomers, such as HIMILAN® 1555, HIMILAN® 1601, HIMILAN® 1605, HIMILAN® 1707, HIMILAN® 1856, and AM 7331, all from Du Pont-Mitsui Polychemicals Co. Ltd. In addition, there may also be mentioned lithium ion neutralized ionomers, such as SURLYN® 7930 and sodium ion neutralized ionomers such as SURLYN® 8120, both from DuPont Co., Ltd. These may also be used singly or in combination of two or more kinds thereof.

Note that the resin filament according to the manufacturing method of the present invention may include, besides an acid-modified resin and an ionomer, a thermoplastic resin or a thermoplastic elastomer to the extent that the above-described effects are not impaired. Furthermore, various kinds of additives, such as an antioxidant, an oil, a plasticizer, a color former, and a weather resistant agent may be included (blended).

The resin filament according to the manufacturing method of the present invention can be manufactured by a known method, and the manufacturing method therefor is not particularly limited. For example, the resin filament can be manufactured by mixing and kneading the resin and the inorganic filler and stretching the resulting resin composition. Alternatively, a master batch is produced in advance by adding a large amount of the inorganic filler to the resin and added to resin to prepare a resin composition containing a predetermined amount of the inorganic filler, and the resin composition is stretched so as to enable manufacturing of the resin filament.

In the manufacturing method of the present invention, the structure of the steel cord is not particularly limited. In the steel cord according to the manufacturing method of the present invention, the structure after vulcanization is preferably a structure that makes it hard for rubber or the like to enter into the steel cord, as in a steel cord having a layer-twisted structure, such as a 3+9 structure, a 3+9+15 structure, a 1+6 structure, or a 1+6+12 structure, or a multi-twisted structure obtained by further twisting any thereof together. Accordingly, in order to successfully obtain the effects of the present invention, a position for arranging the resin filament is preferably inner than an outermost layer sheath filament in the case of the steel cord having a layer-twisted structure, and is preferably inner than an outermost layer sheath strand or inner than the outermost layer sheath filament of each strand in the case of the steel cord having a multi-twisted structure. A cord having such a structure can be suitable to use as a cord for reinforcing a belt of a heavy load tire, so that the manufacturing method of the present invention can be suitable to apply to manufacturing of a heavy load tire for a truck, a bus, or the like.

The structure of the heavy load tire is not particularly limited, and may be a known structure. For example, it can be a tire that includes a pair of bead portions, a pair of side portions, and a tread portion and that is provided with a carcass extending in a toroidal shape between bead cores each buried in the bead portions and a belt including a plurality of belt layers arranged on an outside in a tire radial direction on a crown portion of the carcass. Note that as a gas to be filled in the tire, an inert gas such as nitrogen, argon, or helium can be used other than normal air or air having adjusted oxygen partial pressure.

Note that the surface of the steel filament to be used in the steel cord 10 of the present invention may be subjected to plating treatment. The composition of the plating on the surface of the steel filament is not particularly limited, but preferred is brass plating of copper and zinc, and more preferred is a copper content of 60% by mass or more. In this manner, adhesion between the steel filament and rubber can be improved.

In the steel cord according to the manufacturing method of the present invention, the strength of the resin filament is improved, so that the steel cord can be manufactured by twisting the resin filament together at the same time when twisting the steel filament using a twisting machine generally used for manufacturing a steel cord for a tire. Thus, there is no increase in the number of working steps nor reduction of productivity. Note that, in order to prevent twist breakage of the steel filament and the resin filament, which are dissimilar materials, it is preferable to use a resin material having high strength as much as possible. The strength of the resin filament can be enhanced by increasing a draw ratio in manufacturing the resin filament. Additionally, preferably, the resin filament has good slipperiness in the twisting machine.

The manufacturing method of the present invention includes the vulcanization step of vulcanizing a green tire including a belt having at least one belt layer, and is not particularly limited, except for using the above-described steel cord as a belt layer reinforcing material. For example, while the steel filament can be any conventionally used steel filament, it is preferable to use a steel filament having a tensile strength of 2700 N/mm² or more to secure belt strength. As a steel filament having high tensile strength, one including at least 0.72% by mass of carbon, and particularly at least 0.82% by mass of carbon can be suitably used. In addition, wire diameters of the steel filament and the resin filament are also not particularly limited, and can be designed as appropriate according to purposes. Furthermore, in the manufacturing method of the present invention, conditions such as twisting direction and twisting pitch in the steel cord are also not particularly limited, and can be designed as appropriate according to a usual method. Still furthermore, in the manufacturing method of the present invention, the material for coating the steel cord is also not particularly limited, and a commonly used material for coating a steel cord can be used as appropriate, such as a thermoplastic resin, a thermosetting resin, a thermoplastic elastomer, a thermosetting elastomer, or rubber.

In addition, in the manufacturing method of the present invention, vulcanization conditions such as vulcanization time, temperature, and pressure in the vulcanization step are also not particularly limited, and known conditions can be employed. Furthermore, when manufacturing a tire, regarding steps other than the vulcanization step, usual steps for manufacturing a tire can be employed. For example, at a tire building step before the vulcanization step, there may be prepared members required to form a tire provided with a belt layer, a carcass, a bead core, and the like, and then, using a building machine, these members may be assembled together into a single tire form to build a green tire, which may be followed by vulcanization.

### EXAMPLES

The present invention will be described in more detail hereinafter by using Examples.

### <Examples 1 to 12 and Comparative Examples 1 and 2>

A steel cord having the structure illustrated in FIG. 1A was prepared by using steel filaments having a wire diameter of 0.36 mm and resin filaments having wire diameters of 0.36 mm and 0.15 mm, and the obtained steel cord was coated with coating rubber to prepare a steel cord-rubber composite. The resin filaments were prepared by stretching resin compositions obtained by mixing and kneading TUFTEC™ M1943 (softening point: 39°C) manufactured by Asahi Kasei Corporation as maleic anhydride-modified SEBS, TUFTEC™ H1052 (softening point: 37°C) manufactured by Asahi Kasei Corporation as SEBS resin, ADMER® QE060 (propylene-based copolymer, softening point: 123°C) manufactured by Mitsui Chemicals, Inc., as maleic anhydride-modified PP, HIMILAN® 1702 (softening point: 90°C) manufactured by Du Pont-Mitsui Polychemicals Co. Ltd., as ionomer, and carbon black (ASAHI #55, manufactured by Asahi Carbon Co., Ltd.) in ratios given in Tables 1 to 3 below. In this case, spinnability of the resin filaments and surface roughnesses and strengths of the obtained resin filaments were evaluated in the following manners. Note that the unit for mixing amounts listed in the Tables is parts by mass.

Additionally, the obtained steel cord-rubber composite was vulcanized at 145°C for 15 minutes, and adhesion between the resin and the steel filaments and compatibility of the resin at the rubber interface in the steel cord-rubber composite after the vulcanization were evaluated in the following manners.

### <Spinnability>

Evaluation was made regarding workability in spinning of the resin filaments according to each of the Examples and the Comparative Examples. Cases in which spinning succeeded without any problem were evaluated as ○, whereas a case in which filament breakage occurred during spinning was evaluated as ×. The obtained results are shown together in Tables 1 to 3.

### <Resin Filament Surface Roughness>

Evaluation was made regarding roughness of surfaces of the obtained resin filaments according to each of the Examples and the Comparative Examples. The evaluation was visually performed, in which the roughness of the surfaces was evaluated as small, medium, and large as the roughness increased relatively with reference to one having a smooth surface. The obtained results are shown together in Tables 1 to 3.

### <Twisting Properties>

Evaluation was made regarding workability in manufacturing of a steel cord using the obtained resin filaments according to each of the Examples and the Comparative Examples. A case in which twisting succeeded without any problem was evaluated as A, a case in which filament breakage occurred accidentally during twisting was evaluated as B, and a case in which filament breakage occurred during twisting was evaluated as C. The obtained results are shown together in Tables 1 to 3.

### <Strength>

Regarding the obtained resin filaments according to each of the Examples and the Comparative Examples, measurement was performed according to the chemical fiber filament yarn testing method of JIS L 1013. The obtained results are shown together in Tables 1 to 3.

### <Adhesion to Steel Filaments>

The steel cord was taken out from the steel cord-rubber composite according to each of the Examples and the Comparative Examples after vulcanization, and adhesion between the steel filaments and the resin was visually evaluated. One in which no separation was found between the steel filaments and the resin was evaluated as ○, whereas one in which separation occurred between the steel filaments and the resin was evaluated as ×. The obtained results are shown together in Tables 1 to 3.

### <Compatibility with Rubber Interface>

The steel cord was taken out from the steel cord-rubber composite according to each of the Examples and the Comparative Examples after vulcanization, and compatibility between the resin and rubber was visually evaluated. One having good compatibility, one having partial separation, and one having obvious separation were evaluated as A, B, and C in order. The obtained results are shown together in Tables 1 to 3.

**[Table 1]**

| | EX. 1 | EX. 2 | EX. 3 | EX. 4 | EX. 5 |
|---|---|---|---|---|---|
| Maleic anhydride SEBS | 90 | 80 | 70 | 60 | 50 |
| SEBS | - | - | - | - | - |
| Maleic anhydride-modified PP | - | - | - | - | - |
| Ionomer | 10 | 20 | 30 | 40 | 50 |
| Carbon black | 20 | 20 | 20 | 20 | 20 |
| Spinnability | ○ | ○ | ○ | ○ | ○ |
| Twisting properties | B | B | B | B | B |
| Strength (MPa) | 45 | 51 | 53 | 58 | 65 |
| Resin filament surface roughness | Medium | Medium | Small | Smooth | Smooth |
| Adhesion to steel filaments | ○ | ○ | ○ | ○ | ○ |
| Compatibility with rubber interface | A | C | B | B | A |

**[Table 2]**

| | EX. 6 | EX. 7 | EX. 8 | EX. 9 | EX. 10 |
|---|---|---|---|---|---|
| Maleic anhydride SEBS | 40 | | | | - |
| SEBS | - | - | 50 | - | - |
| Maleic anhydride-modified PP | - | 50 | - | - | - |
| Ionomer | 60 | 50 | 50 | 100 | 100 |
| Carbon black | 20 | 20 | 20 | 20 | 18 |
| Spinnability | ○ | ○ | ○ | ○ | ○ |
| Twisting properties | B | A | B | A | A |
| Strength (MPa) | 68 | 70 | 65 | 74 | 58 |
| Resin filament surface roughness | Smooth | Smooth | Large | Smooth | Smooth |
| Adhesion to steel filaments | ○ | ○ | ○ | ○ | ○ |
| Compatibility with rubber interface | A | A | A | B | B |

**[Table 3]**

| | EX. 11 | EX.12 | Comp-EX. 1 | Comp-EX. 2 |
|---|---|---|---|---|
| Maleic anhydride SEBS | | - | 100 | - |
| SEBS | - | - | - | 100 |
| Maleic anhydride-modified PP | - | - | - | - |
| Ionomer | 100 | 100 | - | - |
| Carbon black | 15 | 10 | 0 | 0 |
| Spinnability | ○ | ○ | ○ | × |
| Twisting properties | A | A | C | B |
| Strength (MPa) | 48 | 45 | 22 | 25 |
| Resin filament surface roughness | Smooth | Smooth | Large | Large |
| Adhesion to steel filaments | ○ | ○ | ○ | × |
| Compatibility with rubber interface | B | B | A | A |

From the above, it can be seen that, in the steel cords according to the manufacturing method of the present invention, the gap between the steel filaments can be filled by softening the resin filaments, and there is good adhesion between the steel filaments and the resin, so that moisture can be favorably prevented from spreading inside the steel cords. In addition, a comparison between the Examples and the Comparative Examples shows that the spinnability and the twisting properties have been improved by the effect of the ionomer. Thus, according to the manufacturing method of the present invention, a tire can be manufactured that has excellent resistance against belt separation caused by rust due to moisture in external environment, without sacrificing productivity.

### DESCRIPTION OF SYMBOLS

- 1a, 1b: Resin filament
- 2a, 2b: Steel filament
- 3: Resin
- 10: Steel cord

## Claims

1. A method for manufacturing a tire comprising a vulcanization step of vulcanizing a green tire provided with a belt having at least one belt layer, wherein the belt layer includes a steel cord (10) formed by twisting a steel filament (2a, 2b) together with a resin filament (1a, 1b) having a softening point of 125°C or lower, wherein the softening point refers to a value measured using a softening point test method described in JIS K 7206 (1999), and wherein the resin filament (1a, 1b) includes at least an ionomer and includes 0.1 to 30 parts by mass of an inorganic filler with respect to 100 parts by mass of a resin component, wherein the resin filament (1a, 1b) further includes a resin modified with an acid anhydride, wherein the modified resin is a maleic acid-modified resin and/or a dimer acid-modified resin and wherein a mass ratio of the maleic acid-modified resin to the ionomer is 4:6 to 6:4; and wherein the resin encompasses thermoplastic resins including thermoplastic elastomers and thermosetting resins including thermosetting elastomers, but not encompassing vulcanized rubber.

2. The method for manufacturing a tire according to claim 1, wherein the inorganic filler is carbon black.

3. The method for manufacturing a tire according to claim 2, wherein a grade of the carbon black is GPF.

4. The method for manufacturing a tire according to any one of claims 1 to 3, wherein the tire is a heavy load tire for a truck or a bus.

## Patentansprüche

1. Verfahren zur Herstellung eines Reifens, umfassend einen Vulkanisierungsschritt des Vulkanisierens eines Reifenrohlings, der mit einem Gürtel versehen ist, der mindestens eine Gürtelschicht aufweist, wobei die Gürtelschicht ein Stahlseil (10) einschließt, der durch Verdrillen eines Stahlfilaments (2a, 2b) zusammen mit einem Harzfilament (1a, 1b) mit einem Erweichungspunkt von 125 °C oder niedriger gebildet wird, wobei sich der Erweichungspunkt auf einen Wert bezieht, der unter Verwendung eines in JISK 7206 (1999) beschriebenen Erweichungsprüfverfahrens gemessen wird, und wobei das Harzfilament (1a, 1b) mindestens ein lonomer einschließt und 0,1 bis 30 Massenteile eines anorganischen Füllstoffs in Bezug auf 100 Massenteile einer Harzkomponente einschließt, wobei das Harzfilament (1a, 1b) ferner ein Harz einschließt, das mit einem Säureanhydrid modifiziert ist, wobei das modifizierte Harz ein Maleinsäure-modifiziertes Harz und/oder ein Dimersäure-modifiziertes Harz ist und wobei ein Massenverhältnis des Maleinsäure-modifizierten Harzes zu dem lonomer 4:6 bis 6:4 beträgt; und wobei das Harz thermoplastische Harze einschließlich thermoplastischer Elastomere und duroplastische Harze einschließlich duroplastischer Elastomere umfasst, aber nicht vulkanisierten Kautschuk umfasst.

2. Verfahren zur Herstellung eines Reifens gemäß Anspruch 1, wobei der anorganische Füllstoff Ruß ist.

3. Verfahren zur Herstellung eines Reifens gemäß Anspruch 2, wobei ein Grad des Rußes GPF ist.

4. Verfahren zum Herstellen eines Reifens gemäß einem der Ansprüche 1 bis 3, wobei der Reifen ein Schwerlastreifen für einen Lastkraftwagen oder einen Bus ist.

## Revendications

1. Procédé de fabrication d'un pneumatique comprenant une étape de vulcanisation pour vulcaniser un pneumatique cru pourvu d'une bande ayant au moins une couche de ceinture, dans lequel la couche de ceinture inclut une corde d'acier (10) formée par torsion d'un filament en acier (2a, 2b) conjointement avec un filament de résine (1a, 1b) ayant un point de ramollissement de 125 °C ou moins, dans lequel le point de ramollissement désigne une valeur mesurée en utilisant un procédé de test de point de ramollissement décrit dans JISK 7206 (1999), et dans lequel le filament de résine (1a, 1b) comprend au moins un ionomère et comprend de 0,1 à 30 parties en masse d'une charge inorganique par rapport à 100 parties en masse d'un composant de résine, dans lequel le filament de résine (1a, 1b) comprend en outre une résine modifiée avec un anhydride d'acide, dans lequel la résine modifiée est une résine modifiée par l'acide maléique et/ou une résine modifiée par un acide dimère et dans lequel un rapport de masse de la résine modifiée par l'acide maléique à l'ionomère est de 4:6 à 6:4 ; et dans lequel la résine englobe des résines thermoplastiques comprenant des élastomères thermoplastiques et des résines thermodurcissables incluant des élastomères thermodurcissables, mais n'englobant pas de caoutchouc vulcanisé.

2. Procédé de fabrication d'un pneumatique selon la revendication 1, dans lequel la charge inorganique est du noir de carbone.

3. Procédé de fabrication d'un pneumatique selon la revendication 2, dans lequel un grade du noir de carbone est le GPF.

4. Procédé de fabrication d'un pneumatique selon l'une quelconque des revendications 1 à 3, dans lequel le pneumatique est un pneumatique à charge lourde pour un camion ou un bus.
